# FASCICULE DE BREVET EUROPEEN

(11) **EP 0 430 779 B1**
(45) Date de publication et mention de la délivrance du brevet: **15.09.1993**
(21) Numéro de dépôt: 90403321.4
(22) Date de dépôt: 23.11.1990
(51) Int. Cl.: A01D 23/02

(54) **Dispositif pour effeuiller des végétaux, en particulier des betteraves**
Blattschläger und Köpfer für Rüben
Leaf stripper and topper, specially for beet

(30) Priorité: 24.11.1989 FR 8915467
(43) Date de publication de la demande: 05.06.1991
(73) Titulaire: ETABLISSEMENTS JEAN MOREAU, 59159 Marcoing (FR)
(72) Inventeur: Cappon, Michel, Edmond, Gustave, F-59159 Noyelles sur Escaut (FR)
(74) Mandataire: Aron, Georges

(56) Documents cités:
- FR-A- 2 329 179
- FR-A- 2 622 764
- US-A- 3 423 914
- US-A- 3 583 136

## Description

La présente invention est relative à un dispositif pour effeuiller des végétaux cultivés en lignes, en particulier des betteraves.

Dans le document FR-A-2.622.764, au nom de la demanderesse, il est décrit un tel dispositif, comportant deux rotors pourvus de fléaux, placés l'un derrière l'autre dans le sens de la marche, et un capot déflecteur qui oriente la trajectoire des morceaux de feuilles découpées par les fléaux pour les faire retomber sur le sol en arrière des rotors par rapport au sens d'avancement, ce capot présentant des nervures déflectrices pour dévier la trajectoire des morceaux de feuilles enlevés par les fléaux, afin de les faire retomber entre les lignes desdits végétaux. On évite ainsi que ces débris de feuilles recouvrent la partie restante des végétaux, en particulier les tubercules de betteraves, au point de les rendre peu visibles, ce qui gênerait la conduite du véhicule porteur, et nuirait à l'efficacité de l'arrachage ultérieur.

L'expérience a cependant montré que ce dispositif n'est pas totalement efficace, et qu'une partie des débris de feuilles tombe sur la ligne des végétaux restants.

Le document US-A-3.423.914 décrit un effeuilleur à deux rotors placés sous capot, pourvus de fléaux et situés l'un derrière l'autre. Le second rotor est équipé de fléaux seulement sur les parties de sa longueur qui correspondent aux lignes de betteraves à effeuiller, et il est dit que, si on fait tourner ces rotors en sens opposés, le second rotor nettoie les sommets des betteraves, et envoie les débris de feuilles qu'il produit entre les lignes.

Le sens de rotation n'est pas précisé, mais il est clair que ce résultat ne peut être obtenu que si la partie inférieure du second rotor se déplace dans le sens d'avancement, car une rotation en sens inverse ne pourrait pas pousser les débris vers l'extérieur de la ligne. Le premier rotor tourne en sens inverse et, à moins de vitesses très faibles, il en résulte un courant d'air additionnel entre les deux rotors. Ce courant d'air entraîne les débris de feuilles produits par le premier rotor vers le capotage, et ces débris sont ensuite déposés vers l'arrière, aussi bien sur les lignes qu'entre celles-ci, d'où un résultat nécessairement imparfait.

Le document US-A-3.583.136 décrit, lui-aussi, une effeuilleuse à deux rotors équipées de fléaux seulement sur les parties de leur longueur qui correspondent aux lignes de betteraves à effeuiller. Ce document ne signale pas que cette disposition des fléaux ait un effet sur la répartition des débris de feuillage déposés sur le sol.

Le document FR-A-2.329.179 décrit un dispositif à deux rotors équipés de fléaux, dont le premier rotor sert à l'effeuillage et produit des débris de feuilles qui sont évacués latéralement à l'aide d'une vis sans fin disposée transversalement, et le second rotor est un scalpeur dont les fléaux sont disposés sur les parties de la longueur du rotor qui correspondent aux lignes de betteraves, et sont des organes de coupe de la partie supérieure du tubercule.

La présente invention a pour but de fournir un dispositif d'effeuillage qui, de façon plus efficace que dans l'art antérieur, dépose la plus grande partie des débris de feuilles entre les lignes de végétaux effeuillés.

Pour obtenir ce résultat, l'invention fournit donc un dispositif pour effeuiller des végétaux cultivés en ligne et pourvus d'une touffe de feuilles s'étendant au-dessus d'un tronc ou tubercule en saillie sur le sol, tels que des betteraves ou des carottes, ce dispositif étant prévu pour être déplacé parallèlement aux lignes de végétaux et comportant :
- un premier rotor pourvu de fléaux aptes à couper lesdites feuilles, ce rotor tournant autour d'un axe de rotation horizontal, perpendiculaire à la direction d'avancement, situé au-dessus du sol, le sens de rotation étant défini par le fait que la partie inférieure du rotor se déplace dans la direction d'avancement,
- un second rotor, pourvu de fléaux souples, aptes à compléter l'effeuillage sans endommager la tête ou le tronc des végétaux, ce rotor tournant autour d'un axe parallèle à celui du premier rotor et dans le même sens de rotation, et étant situé en arrière de lui dans le sens de déplacement du dispositif, et
- un capot passant au-dessus des deux rotors et descendant vers l'arrière, dans le sens du déplacement, jusqu'au voisinage du sol, ce capot présentant intérieurement des nervures déflectrices situées en correspondance avec les lignes desdits végétaux, le capot définissant, pour les morceaux de feuilles découpés par les fléaux du premier et du second rotor, un trajet qui longe le capot et aboutit à la partie de la surface du sol qui se trouve entre les lignes desdits végétaux, et à l'arrière du dispositif,

ce dispositif ayant pour particularité que le second rotor est dépourvu de fléaux dans les parties de sa longueur qui sont au droit des intervalles entre lesdites nervures du capot, et pourvu de fléaux dans les parties de sa longueur qui sont au droit desdites nervures.

L'invention procède de la découverte, inattendue, que, dans une machine du type décrit dans FR-A-2622764, à deux rotors tournant dans le même sens et à capot pourvu de nervures déflectives, si l'on interrompt la continuité des fléaux souples du second rotor au droit des zones qui séparent les nervures déflectrices du capot, on obtient une amélioration surprenante de la répartition des feuilles déposées sur le sol, celles-ci venant se grouper essentiellement dans des files situées dans l'intervalle des lignes de betteraves ou autres végétaux.

Ce résultat découle, apparemment, de phénomènes aérodynamiques complexes, qui ne seront pas expliqués dans le présent texte.

Il a été constaté que les meilleurs résultats sont obtenus lorsque la longueur d'une partie du second rotor qui est dépourvue de fléaux est à peu près égale à la longueur d'une partie du même rotor qui est pourvue de fléaux.

On a également constaté qu'il était préférable que les fléaux du second rotor soient formés de lames de matière souple, aplaties dans un plan parallèle à l'axe du rotor, et à peu près jointives entre elles.

Il est préférable que la vitesse de rotation du second rotor soit comprise entre 30 et 60% environ de la vitesse du premier rotor, et que la longueur radiale des fléaux du second rotor, à partir de l'axe, soit supérieure de 10 à 80% à celle des fléaux du premier rotor, et que la vitesse périphérique des extrémités des fléaux du second rotor soit comprise entre 0,5 et 0,9 fois celle des extrémités des fléaux du premier rotor.

En ce qui concerne les fléaux du premier rotor, il a également été observé qu'il était préférable qu'ils soient conformes à la réalisation décrite dans le document FR-A-2.622.764, c'est-à-dire avec des parties actives constituées de pièces sensiblement planes et situées, au cours de la marche, dans un plan tangentiel par rapport à l'axe de rotation, ces fléaux étant avantageusement formés d'une pièce de tôle pliée comportant ladite partie active, et une partie de liaison reliant cette partie active à un pivot reliant chaque fléau au rotor. Il est également avantageux que les parties actives de deux fléaux adjacents soient pratiquement jointives, au cours de la marche, dans le sens des génératrices du cylindre engendrées par leur rotation.

L'invention va maintenant être décrite de façon plus précise à l'aide d'un exemple pratique concerne un dispositif d'effeuillage de betteraves conforme à l'invention, illustré avec les dessins, parmi lesquels :
Figure 1 est une coupe du dispositif, selon la ligne I-I de la figure 2, qui correspond à un plan vertical parallèle à la direction d'avancement,
Figure 2 est une coupe horizontale selon la ligne II-II de la figure 1,
Figure 3 est une vue de détail en élévation, montrant la structure des fléaux du premier rotor, et
Figure 4 est une vue analogue montrant le détail des fléaux du second rotor.

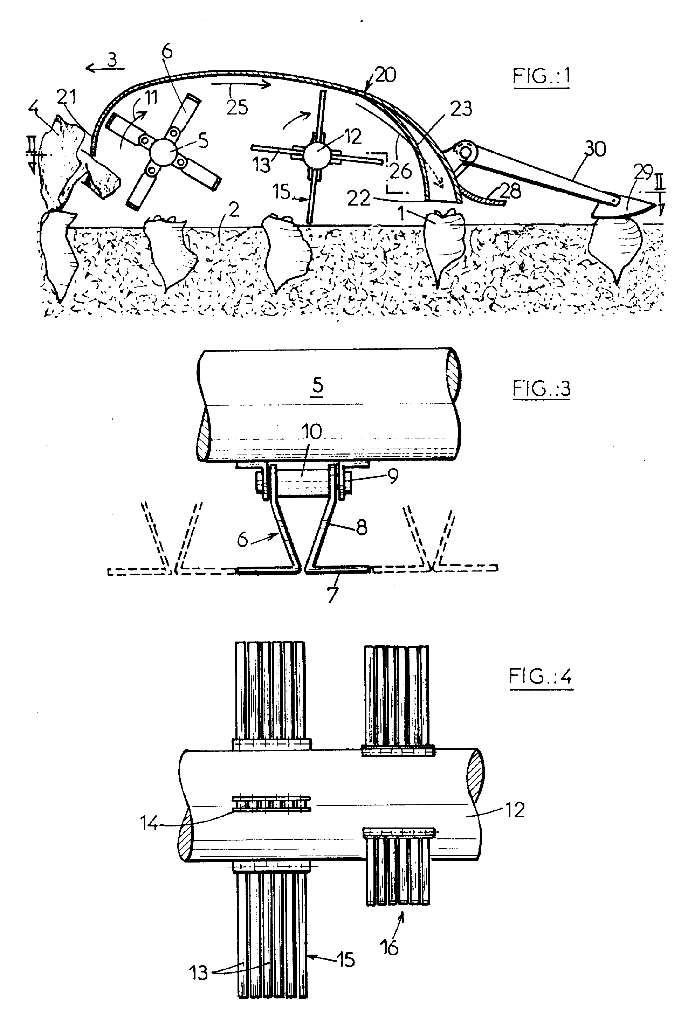

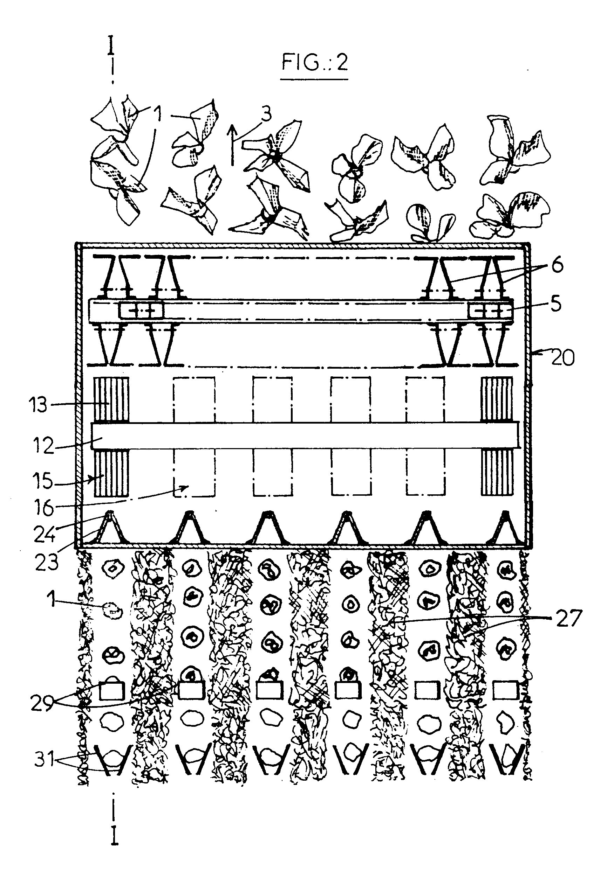

Le dispositif selon l'invention est destiné à effeuiller des betteraves 1, plantées en ligne dans le sol 2, en se déplaçant dans le sens indiqué par la flèche 3, c'est-à-dire vers la gauche sur la figure 1, et vers le haut sur la figure 2. Le dispositif est porté par un véhicule non représenté, qui le maintient au-dessus du sol 2 à une hauteur convenable pour enlever le feuillage 4 des betteraves 1. Un premier rotor 5, disposé horizontalement et perpendiculairement au sens de la marche, porte une série de fléaux articulés 6, mieux visibles à la figure 3.

Ces fléaux, qui sont identiques à ceux qui sont décrits dans le document FR-A-2.622.764, sont formés à partir d'une feuille de tôle pliée, et comprennent chacun une partie active 7 et une partie de liaison 8 qui relie la partie active à un pivot 9 porté par le rotor 5. Les parties actives 7, en marche, sont tangentes à un cylindre parallèle à l'axe du rotor. Des entretoises 10 maintiennent les parties actives de deux fléaux adjacents, portés par le même pivot, à une très faible distance l'une de l'autre, et les fléaux voisins, représentés en tirets, sont disposés de façon que leur partie active se trouve à proximité immédiate de la partie active du fléau voisin. Il en résulte que les parties actives des divers fléaux constituent des surfaces à peu près continues dans une direction parallèle à l'axe du rotor 5. En fonctionnement, le rotor 5 tourne dans le sens indiqué par la flèche 11, c'est-à-dire que la partie basse des fléaux se déplace vers l'avant dans le sens du déplacement, de façon à couper les feuilles, et à diriger les débris vers le haut, puis vers l'arrière.

Un second rotor 12 est disposé immédiatement derrière le rotor 5. Son axe est parallèle à celui du rotor 5, et situé à peu près à la même hauteur au-dessus du sol, ou un petit peu plus haut. Les fléaux du rotor 12 ont une structure différente de celle du rotor 5. Il s'agit en effet de lamelles 13, de matière souple, telle que du caoutchouc, montées avec leur plus grande dimension sensiblement perpendiculaire à l'axe du rotor, et aplaties parallèlement à cet axe. Elles sont fixées par groupes de lamelles adjacentes, par serrage entre des cornières 14, fixées sur le rotor 12 parallèlement à son axe. Un groupe 15 de lamelles adjacentes, au nombre de six sur la figure 4, est séparé du groupe 16 suivant, dans une direction parallèle à l'axe du rotor, par un intervalle de longueur à peu près égale à celle d'un de ces groupes 15-16 de lamelles. En outre, l'implantation des groupes 15, 16 successifs est décalée angulairement, afin d'éviter des à-coups, en particulier lors de la mise en marche.

Comme le montre la figure 2, l'implantation des groupes 15-16 de lamelles 13 est telle que chaque groupe est au-dessus d'une ligne de betteraves 1, alors que les espaces du rotor qui sont dépourvus de telles lamelles correspondent à des parties du sol situées entre deux lignes de betteraves.

Dans l'exemple pratique, chaque groupe 15, 16 de fléaux est constitué de sept fléaux 13 adjacents, et il y a trois groupes 15 ou 16 sur un même tour du rotor. On a préféré représenter quatre groupes par tour sur les figures pour faciliter la présentation de l'invention. En fait, le nombre des fléaux et de groupes de fléaux peut être modifié sans sortir de l'invention. Toujours pour faciliter la présentation, on n'a pas figuré sur la figure 1 le décalage angulaire entre groupes 15, 16 successifs, visible à la figure 2. Ce décalage peut être supprimé ou avoir une importance différente de ce qui est visible sans qu'on sorte de l'invention.

Dans l'exemple pratique décrit, les vitesses de rotation respectives des rotors sont de 2600 et 1080 tours minute, et la distance entre l'extrémité périphérique d'un fléau et l'axe de rotation est de 120 mm pour le premier rotor et 190 mm pour le second, si bien que la vitesse périphérique des fléaux 13 du second rotor est à peu près les deux tiers de celle des fléaux 6 du premier rotor.

Les deux rotors sont recouverts ensemble par un capot 20, qui a la forme générale d'un demi-cylindre aplati vers le haut, et dont les génératrices sont parallèles à l'axe des rotors. Le bord avant 21 du capot 20 se trouve en avant du rotor 5, a peu près à la hauteur de son axe, cependant que son bord arrière 22 se trouve assez loin derrière le rotor 12, et à une distance du sol beaucoup plus faible, calculée pour qu'il passe seulement à faible hauteur au-dessus des betteraves 1, qui ont perdu leurs feuilles. Le capot 20 est en tôle métallique, il pourrait également être construit en matière plastique. A la partie arrière du capot, c'est-à-dire dans la partie qui est en arrière du rotor 12, des nervures déflectrices 23 sont fixées sur la surface intérieure du capot et s'en vont jusqu'au niveau de son bord arrière 21. Les nervures déflectrices ont une section transversale en V dont la pointe 24 est dirigée vers l'intérieur du capot, c'est-à-dire vers le rotor 12. Elles sont disposées de façon à se trouver en correspondance avec les lignes de betteraves, et par conséquent avec les groupes 15, 16 de fléaux du rotor 12. La dimension de la section des nervures 23 va en croissant depuis leur naissance, à proximité du point où le capot 20 surplombe le rotor 12, jusqu'à l'extrémité arrière 22 de ce capot. Le capot 20 est destiné à diriger des morceaux de feuilles découpés par les fléaux 6 du rotor 5 suivant un trajet, défini par les flèches 25, 26, qui les mène à se déposer à l'arrière du dispositif en des files de débris 27 situées entre les lignes de betteraves.

A l'arrière de la partie arrière 22 du capot est disposée une bavette 28 en matériau souple, comme du caoutchouc. L'utilité de cette bavette, qui s'étend sur toute la longueur transversale du capot, et qui n'a pas été représentée à la figure 2, est de s'opposer à la dispersion du nuage de gouttelettes de sève et de fines particules qui est engendré lors de l'attaque des feuilles, et qui serait de nature à limiter la visibilité pour le conducteur de l'engin portant le dispositif.

On a représenté en 29 des "scalpeurs", destinés à enlever une petite épaisseur de la partie supérieure de la betterave. Les scalpeurs sont portés par les bras articulés 30, qui les relient au capot 20. Les bras 30 n'ont pas été représentés à la figure 2, pour des raisons de clarté. Les scalpeurs ne sont pas nécessaires au fonctionnement du dispositif selon l'invention, et peuvent être supprimés si l'utilisateur le désire.

Dans le cas de la figure 2, on a représenté symboliquement des socs d'arrachage 31, destinés à extraire les betteraves du sol, en vue de leur ramassage. Il est clair que le dispositif d'effeuillage peut être conçu de façon autonome. Cependant, dans la technique moderne, il est associé à une machine combinée qui opère l'arrachage, le relevage et l'évacuation des betteraves sur un véhicule de transport, en une seule opération. En raison des dimensions d'une telle machine, la parfaite visibilité des lignes de betteraves, clairement distincte des lignes de feuilles déposées entre ces lignes, facilite la conduite de l'engin.

## Revendications

1. Dispositif pour effeuiller des végétaux cultivés en lignes et pourvus d'une touffe de feuilles (4) s'étendant au-dessus d'un tronc ou tubercule en saillie sur le sol, tels que des betteraves (1) ou des carottes, ce dispositif étant prévu pour être déplacé parallèlement aux lignes de végétaux et comportant :
- un premier rotor (5) pourvu de fléaux (6) aptes à couper lesdites feuilles, ce rotor tournant autour d'un axe de rotation horizontal, perpendiculaire à la direction d'avancement, situé au-dessus du sol, le sens de rotation du rotor étant défini par le fait que la partie inférieure du rotor se déplace dans la direction d'avancement,
- un second rotor (12), pourvu de fléaux (13) souples, aptes à compléter l'effeuillage sans endommager la tête ou le tronc des végétaux, ce rotor tournant autour d'un axe parallèle à celui du premier rotor et dans le même sens de rotation, et étant situé en arrière de lui dans le sens du déplacement du dispositif, et
- un capot (20) passant au-dessus des deux rotors et descendant vers l'arrière, dans le sens du déplacement, jusqu'au voisinage du sol, ce capot présentant intérieurement des nervures déflectrices (23) situées en correspondance avec les lignes desdits végétaux, le capot définissant, pour les morceaux de feuilles découpés par les fléaux du premier et du second rotor, un trajet qui, longe le capot et aboutit à la partie de la surface du sol qui se trouve entre les lignes desdits végétaux, et à l'arrière du dispositif,
caractérisé en ce que le second rotor est dépourvu de fléaux (13) dans les parties de sa longueur qui sont au droit des intervalles entre lesdites nervures (23) du capot, et pourvu de fléaux dans les parties de sa longueur qui sont au droit desdites nervures.

2. Dispositif selon la revendication 1, caractérisé en ce que la longueur d'une partie du second rotor (12) qui est dépourvue de fléaux est à pou près égale à la longueur d'une partie du même rotor qui est pourvu de fléaux.

3. Dispositif selon la revendication 1 ou 2, dans lequel les fléaux (13) du second rotor sont formés de lames de matière souple, caractérisé en ce que ces lames sont aplaties dans un plan parallèle à l'axe du rotor, et à peu près jointives entre elles.

4. Dispositif selon l'une des revendications 1 à 3, caractérisé en ce que la vitesse de rotation du second rotor est 30 à 60% de celle du premier rotor.

5. Dispositif selon l'une des revendications 1 à 4, caractérisé en ce que la longueur radiale des fléaux du second rotor, à partir de l'axe, est supérieure de 10 à 80% à celle des fléaux du premier rotor.

6. Dispositif selon l'une des revendications 1 à 5, caractérisé en ce que la vitesse périphérique des extrémités des fléaux du second rotor est comprise entre 0,5 et 0,9 fois celle des extrémités des fléaux du premier rotor.

## Patentansprüche

1. Blattschläger und köpfer für in Reihen angebaute Pflanzen, welche über ein Blattbüschel (4) verfügen, das sich über einen Stumpf oder eine knolle auf den Boden überhängend ausbreitet, wie Rüben (1) oder karotten, wobei diese Vorrichtung parallel zu den Pflanzenreihen bewegt wird und folgende Teile aufweist:
- einen ersten Rotor (5) mit Flegeln (6) zum Schneiden der genannten Blätter, wobei sich dieser Rotor um eine horizontale, senkrecht zur Fahrtrichtung und mit Abstand zum Boden liegende Rotationsachse dreht, wobei die Drehrichtung des Rotors dadurch festgelegt wird, daß der untere Teil des Rotors sich in Fahrtrichtung bewegt,
- einen zweiten Rotor (12) mit flexiblen Flegeln (13) zur Vollendung der Blattentfernung ohne Beschädigung des Pflanzenkopfes oder -stumpfes, wobei sich dieser Rotor um eine zur Achse des ersten Rotors parallelen Achse und in der gleichen Drehrichtung dreht, und hinter diesem in Bewegungsrichtung der Vorrichtung angebracht ist, sowie
- eine Haube (20), welche sich über die beiden Rotoren erstreckt und in Bewegungsrichtung nach hinten bis in die Nähe des Bodens hin abfällt, wobei diese Haube im Inneren Ablenkrippen (23) aufweist, die den genannten Pflanzenreihen zugeordnet angebracht sind, wobei die Haube für die Blattstücke, die von den Flegeln des ersten und zweiten Rotors abgeschnitten werden, einen Weg vorgibt, der entlang der Haube verläuft und auf dem Stück der Bodenoberfläche endet, das sich zwischen den genannten Pflanzenreihen und hinter der Vorrichtung befindet,
dadurch gekennzeichnet, daß der zweite Rotor keine Flegel (13) an seinen Langsteilen aufweist, die den Abständen zwischen den gennanten Rippen (23) der Haube entsprechen, und daß er hingegen Flegel an seinen Längsteilen aufweist, die den genannten Rippen entsprechen.

2. Vorrichtung nach Anspruch 1, dadurch gekennzeichnet, daß die Länge eines Teils des zweiten Rotors (12), welches keine Flegel aufweist, ungefähr gleich der Länge eines Teils desselben Rotors, der Flegel aufweist, ist.

3. Vorrichtung nach Anspruch 1 oder 2, in welcher die Flegel (13) des zweiten Rotors als Schneideblätter aus flexiblem Material ausgebildet sind, dadurch gekennzeichnet, daß diese Schneideblätter in einer parallelen Ebene zur Achse des Rotors abgeflacht und ungefähr nebeneinanderliegend sind.

4. Vorrichtung nach einem der Ansprüche 1 bis 3, dadurch gekennzeichnet, daß die Drehgeschwindigkeit des zweiten Rotors ungefähr zwischen 30 und 60 % derjenigen des ersten Rotors beträgt.

5. Vorrichtung nach einem der Ansprüche 1 bis 4, dadurch gekennzeichnet, daß die radiale Länge der Flegel des zweiten Rotors, ausgehend von der Achse, um 10 bis 80 % über derjenigen der Flegel des ersten Rotors liegt.

6. Vorrichtung nach einem der Ansprüche 1 bis 5, dadurch gekennzeichnet, daß die Umfangsgeschwindigkeit der Flegelspitzen des zweiten Rotors zwischen 0,5 und 0,9mal derjenigen der Flegelspitzen des ersten Rotors liegt.

## Claims

1. Apparatus for removing leaves from plants grown in lines which have a tuft of leaves (4) extending above a stalk or tuber projecting above ground, such as beetroot (1) or carrots, this apparatus being adapted to move parallel to the rows of plants and comprising
- a first rotor (5) equipped with flails (6) adapted to cut said leaves, this rotor rotating about a horizontal rotation axis perpendicular to the direction of advance, located above the ground, the direction of rotation of the rotor being defined by the fact that the lower part of the rotor moves in the direction of advance,
- a second rotor (12) equipped with flexible flails (13), adapted to complete the removal of the leaves without damaging the head or the stalk of the plants, this rotor rotating about an axis parallel to that of the first rotor and in the same direction of rotation, and being located behind said first rotor in the direction of travel of the apparatus, and
- a hood (20) fitting over the two rotors and coming down at the back, in the direction of travel, until it is close to the ground, this hood having on the inside deflecting ribs (23) arranged in accordance with the rows of plants, the hood defining, for the fragments of leaves cut off by the flails of the first and second rotors, a path which runs along the hood and ends at that part of the surface of the ground located between the rows of plants, and behind the apparatus,
characterised in that the second rotor has no flails (13) in those parts of its length which are aligned with the gaps between said ribs (23) of the hood, but is provided with flails in those parts of its length which are aligned with said ribs.

2. Apparatus according to claim 1, characterised in that the length of a portion of the second rotor (12) which is free from flails is substantially equal to the length of a portion of the same rotor which is equipped with flails.

3. Apparatus according to claim 1 or 2, wherein the flails (13) of the second rotor are formed from flexible blades, characterised in that these blades are flattened in a plane parallel to the axis of the rotor and are substantially adjacent to one another.

4. Apparatus according to one of claims 1 to 3, characterised in that the speed of rotation of the second rotor is 30 to 60% of that of the first rotor.

5. Apparatus according to one of claims 1 to 4, characterised in that the radial length of the flails of the second rotor, starting from the axis, is 10 to 80% greater than that of the flails of the first rotor.

6. Apparatus according to one of claims 1 to 5, characterised in that the peripheral velocity of the ends of the flails of the second rotor is between 0.5 and 0.9 times that of the ends of the flails of the first rotor.
